# EUROPÄISCHE PATENTANMELDUNG

(11) **EP 2 706 343 A2**
(43) Veröffentlichungstag der Anmeldung: **12.03.2014**
(21) Anmeldenummer: 13183733.8
(22) Anmeldetag: 10.09.2013
(51) Int. Cl.: G01N 11/14, G01N 29/024

(54) **Verfahren und Vorrichtung zur synchronen Bestimmung der rheologischen und akustischen Eigenschaften**

(30) Priorität: 10.09.2012 DE 102012108401
(71) Anmelder: Deutsches Zentrum für Luft- und Raumfahrt e.V., 51147 Köln (DE)
(72) Erfinder: Liebers, Nico, 21680 Stade (DE); Schadow, Florian, 18057 Rostock (DE)
(74) Vertreter: Aisch, Sebastian

(57) **Zusammenfassung**

Die Erfindung betrifft ein Verfahren zur Bestimmung einer Korrelation von durch ein Rheometer ermittelbaren Fließeigenschaften mit durch einen Schallsensor ermittelbaren Schallübertragungseigenschaften eines Materials, wobei an dem Rheometer ein Schallgeber und ein Schallsensor angeordnet wird und sowohl die rheologische Messung als auch die akustische Messung während einer Beaufschlagung an ein und derselben Materialprobe mit Temperatur durchgeführt wird, wobei aus beiden Messungen dann eine Korrelation gebildet wird.

## Beschreibung

Die Erfindung betrifft ein Verfahren zur Bestimmung einer Korrelation von durch ein Rheometer ermittelbaren Fließeigenschaften mit durch einen Schallsensor ermittelbaren Schallübertragungseigenschaften eines Materials, insbesondere eines Harzes zur Herstellung von Faserverbundbauteilen. Die Erfindung betrifft ebenso ein Rheometer hierzu sowie die Verwendung eines Rheometers für ein derartiges Verfahren.

Rheometer werden meist dazu verwendet, die Fließeigenschaften von Materialien bei einer bestimmten Temperatur oder eines Temperaturverlaufes über die Zeit unter einer Materialbelastung zu bestimmen. Hierzu wird eine Materialprobe in das Rheometer eingebracht und anschließend mit einer Temperatur bzw. eines Temperaturverlaufes beaufschlagt, wobei während der Beaufschlagung mit Temperatur die Materialprobe durch das Rheometer mit einer Kraft beaufschlagt wird, um so eine Materialbelastung zu bewirken und zu messen. Die hierbei gemessenen Kräfte lassen dann Rückschlüsse auf den Zustand der Materialprobe unter einem Temperaturverlauf zu.

In der Faserverbundfertigung werden Rheometer im speziellen dazu verwendet, spezielle Fließeigenschaften der zu verwendenden Harze in der Fertigung unter Berücksichtigung eines bestimmten Temperaturverlaufes zu bestimmen, wie beispielsweise die Viskosität, der Gelpunkt oder den Verglasungspunkt. Denn mit Beaufschlagung von Temperatur beginnt bei dem Harz, das bei der Faserverbundfertigung verwendet wird, die chemische Vernetzungsreaktion, mit der das spätere Faserverbundbauteil seine spezielle Festigkeit bekommt. Bei dieser Vernetzungsreaktion verändert sich über den gesamten Herstellungsprozess die Viskosität (Fließwiderstand), was bei der Planung der Werkzeugaufbauten und der Prozessabläufe (z.B. Temperatur- und Druckverlauf, Injektionszeit, Zeitpunkt des Entformens) zwecks Injektion des Harzes berücksichtigt werden muss. Darüber hinaus ist der Gelpunkt der Harze bei einem bestimmten Temperaturverlauf notwendig zu wissen, da ab diesem Punkt der Fließwiderstand des Harzes so groß ist, dass eine Injektion des Harzes nicht mehr möglich ist und die Fließfront innerhalb des Bauteils stehen bleibt. Schließlich ist noch der Verglasungspunkt wichtig, da ab diesem Zeitpunkt das Harz eine solche Festigkeit und Steifigkeit besitzt, dass das Bauteil über ausreichende Formstabilität verfügt und somit entformt werden kann.

Um qualitative Bauteile ohne Fehlstellen herstellen zu können, ist es daher notwendig zu wissen, welche Fließeigenschaften das Matrixharz bei einem bestimmten Temperaturverlauf besitzt. Denn härtet das Matrixharz zu schnell aus, entstehen Fehlstellen innerhalb des Bauteils, während hohe Temperaturen über den Verglasungspunkt hinaus zu Überhitzungen und somit ebenfalls zu Fehlstellen im Bauteil führen können. Dabei unterscheiden sich derartige Fließeigenschaften sowohl von Material zu Material als auch von Temperaturverlauf zu Temperaturverlauf.

Ein solches Rheometer arbeitet beispielsweise derart, dass zwischen zwei diametral gegenüberliegenden Platten eine Harzprobe eingebracht wird, die dann ausgehärtet wird. Während des Aushärtens der Harzprobe durch Beaufschlagung von Temperatur wird auf eine der Platten eine Kraft aufgebracht, so dass sich eine Materialbelastung, beispielsweise eine Verscherung oder eine Stauchung, ergibt. So sind Rheometer bekannt, bei denen die obere Platte um eine Drehachse oszilliert oder rotiert. Die bei der Oszillation oder Rotation gemessenen Kräfte lassen dann auf spezielle Fließeigenschaften des Harzes schließen. So werden die Rheometer für die Ermittlung des Gelpunktes oder des Verglasungspunktes mittels oszillierender Platte betrieben, während die Rheometer zur Bestimmung der Viskosität der Materialprobe mittels einer rotierenden Platte betrieben werden.

Ein Nachteil hierbei besteht jedoch darin, dass derartige rheologische Messungen während der Herstellung eines Faserverbundbauteils nicht verwendet werden können, so dass im schlechtesten Fall lediglich eine Korrelation zwischen einer rheologischen Probemessung und eines Temperaturverlaufes bleibt. Eine derartige Messung ist allerdings sehr ungenau, da im Realprozess oft andere Bedingungen als im Labor herrschen.

Daher wird in der Regel zusätzlich eine Ultraschallsensorik während der Herstellung eines Faserverbundbauteils verwendet, um so den Harzzustand während des gesamten Herstellungsprozesses unter Beaufschlagung von Temperatur ermitteln zu können. Bei einer Ultraschallsensorik wird mit Hilfe eines Schallgebers ein Schallimpuls in das Bauteil gesendet, das an einer anderen Stelle mit Hilfe eines Schallsensors empfangen werden kann. Hieraus lassen sich dann bestimmte Schalleigenschaften, wie beispielsweise die Schallgeschwindigkeit, ableiten, die dann einen groben Rückschluss auf den Harzzustand, d.h. auf die Viskosität, den Gelpunkt sowie den Verglasungspunkt, liefert.

Allerdings ist auch diese Art der Messung für manche Qualitätsanforderungen zu ungenau, so dass teilweise dazu übergegangen wurde, zunächst in einem Rheometer eine rheologische Messung unter Beaufschlagung eines bestimmten Temperaturverlaufes und anschließend an einer zweiten Harzprobe unter Beaufschlagung desselben Temperaturverlaufes eines Schallmessung durchzuführen, wobei anschließend die Messergebnisse dann miteinander korreliert wurden. Mit Hilfe einer derartigen Korrelationsmessung wird es dann möglich, mit Hilfe der während des Herstellungsprozesses durchgeführten Schallmessung auf die rheologischen Messergebnisse zu schließen, um so einen genaueren Zustand des Harzes während der Herstellung des Faserverbundbauteils zu erhalten. Dies setzt allerdings voraus, dass die Korrelationsmessungen unter möglichst gleichen Bedingungen, d.h. ähnliche Harzproben, gleicher Temperaturverlauf, gleichzeitiger Messbeginn sowie gleiche Probendicke, durchgeführt werden. Kleinste Abweichungen der Messbedingungen führen jedoch zu einem veränderten Reaktionsablauf und demzufolge zu einem verfälschten Messergebnis, so dass die Korrelationsmessungen dann nicht mehr das gewünschte exakte Ergebnis liefern.

Es ist daher Aufgabe der vorliegenden Erfindung ein Verfahren anzugeben, mit dem es möglich ist, eine Korrelationsmessung durchzuführen, die eine möglichst gute Korrelation dieser beiden Messverfahren liefert und somit deren Aussagekraft maßgeblich erhöht.

Die Aufgabe wird erfindungsgemäß mit dem Verfahren der eingangs genannten Art mit den Merkmalen des Anspruches 1 gelöst. Die Aufgabe wird auch mit einem Rheometer mit den Merkmalen des Anspruches 6 gelöst.

Erfindungsgemäß wird somit ein Verfahren vorgeschlagen, mit dem eine Korrelation von durch ein Rheometer ermittelbaren Fließeigenschaften mit durch einen Schallsensor ermittelbaren Schallübertragungseigenschaften eines Materials bestimmt werden kann. Hierzu wird zunächst ein Rheometer bereitgestellt, an dem mindestens ein Schallgeber und Schallsensor zum Aussenden und Empfangen von Schallimpulsen angeordnet sind. In das Rheometer wird dann eine entsprechende Materialprobe eingebracht, an der dann die entsprechende Korrelationsmessung durchgeführt werden soll.

Anschließend wird die in das Rheometer eingebrachte Materialprobe mit Temperatur beaufschlagt, die bspw. einem bestimmten, vordefinierten Temperaturverlauf folgt, wobei während der Temperaturbeaufschlagung sowohl mindestens eine Fließeigenschaft der Materialprobe mit Hilfe des Rheometers als auch mindestens eine Schallübertragungseigenschaft der Materialprobe mit Hilfe der an dem Rheometer angeordneten Schallgeber und Schallsensoren ermittelt wird. Hierdurch können während der Temperaturbeaufschlagung an ein und derselben Materialprobe die beiden Messungen, d.h. die rheologische Messung und die Schallmessung, durchgeführt werden, so dass sich für beide Messverfahren die exakt gleichen und identischen Messbedingungen einstellen lassen.

Dabei haben die Erfinder erkannt, dass trotz der Beaufschlagung der Materialprobe mit einer Kraft durch das Rheometer, um die entsprechende Materialbelastung und die dabei gemessenen Kräfte feststellen zu können, eine Schallmessung möglich ist, die eine hinreichend genaue Aussagekraft hat. Durch diese Erkenntnis wird es möglich die in das Rheometer eingebrachte Materialprobe sowohl rheologisch als auch akustisch während der Beaufschlagung mit Temperatur zu vermessen, so dass anschließend eine hochgenaue Korrelation einer gemessenen Fließeigenschaft mit einer gemessenen Schallübertragungseigenschaft möglich ist.

Nach der Temperaturbeaufschlagung der in das Rheometer eingebrachten Materialprobe erfolgt nun die Korrelation der Fließeigenschaft mit der Schallübertragungseigenschaft, so dass nun mit Hilfe dieser Korrelation bei der Verwendung des Materials in der Herstellung mit Hilfe einer während eines Herstellungsprozesses gemessenen Schallübertragungseigenschaft auf eine rheologische Messung, d.h. auf die Fließeigenschaft, geschlossen werden kann.

Ein Material/eine Materialprobe kann bspw. ein Harz/eine Harzprobe, vorzugsweise ein Harz für die Herstellung eines Faserverbundbauteils, sein. Das Material/die Materialprobe kann aber auch ein Kunststoff/eine Kunststoffprobe, bspw. ein Thermoplast oder Elastomer, sein. Mit Beaufschlagung von Temperatur ist im Sinne der vorliegenden Erfindung eine Temperierung der Materialprobe gemeint, wobei die Temperierung auch mit Umgebungstemperatur durchführbar ist, je nach Art und Eigenschaft des verwendeten Materials.

Wir ein Harz zur Herstellung eines Faserverbundbauteils verwendet, so erfolgt die Beaufschlagung der Harzprobe mit Temperatur, um die Harzprobe auszuhärten.

Hierbei ist es besonders vorteilhaft, wenn ein Schallgeber und/oder Schallsensor bereitgestellt wird, der Schallimpulse mittels eines piezoelektrischen Elementes aussendet und/oder empfängt. Hierdurch wird es möglich, die Schallgeber und Schallsensoren an den Platten des Rheometers anzuordnen und dann beispielsweise in einem Autoklaven dem Aushärtungsprozess zu unterziehen, ohne dass die Schallgeber und Schallsensoren störend bei dem Aushärtungsprozess wirken.

Vorteilhafterweise ist das piezoelektrische Element ein piezoelektrisches Keramikmaterial, das meist flächig ausgebildet ist und somit platzsparend an dem Rheometer angeordnet werden kann.

Bei der Ermittlung der Fließeigenschaft kann beispielsweise die Viskosität, der Gelpunkt und/oder der Verglasungspunkt mit Hilfe des Rheometers an der Materialprobe ermittelt werden. Mit Hilfe des Schallgebers und des Schallsensors kann beispielsweise die Schallgeschwindigkeit als Schallübertragungseigenschaft der Materialprobe ermittelt werden.

So wurde beispielsweise festgestellt, dass ein Schallimpuls seine größte Dämpfung erhält, wenn die Materialprobe, bspw. eine Harzprobe, ihren Gelpunkt erreicht. Mit Hilfe der Korrelation des genauen Gelpunktes aus der rheologischen Messung lässt sich dann die exakte Schallgeschwindigkeit zum Zeitpunkt des Gelpunktes aus der Korrelation feststellen.

Des Weiteren ist es besonders vorteilhaft, wenn die Korrelation der Fließeigenschaften mit der Schallübertragungseigenschaft unter Berücksichtigung des Temperaturverlaufes während der Temperaturbeaufschlagung der Materialprobe im Rheometer bestimmt wird, so dass hierzu eine weitere Komponente für die hochgenaue Korrelationsmessung vorliegt.

Darüber hinaus wird die Aufgabe auch gelöst mit einem Rheometer zur rheologischen Ermittlung mindestens einer Fließeigenschaft einer in das Rheometer eingebrachten Materialprobe, bei dem eine Materialbelastung während einer Beaufschlagung der Materialprobe mit Temperatur gemessen wird, wobei an dem Rheometer zumindest ein Schallgeber und Schallsensor vorgesehen sind, die zum Aussenden und Empfangen eines Schallimpulses zur Ermittlung einer Schallübertragungseigenschaft der Materialprobe während der Temperaturbeaufschlagung und während der rheologischen Ermittlung der mindestens einen Fließeigenschaft eingerichtet sind.

Vorteilhafte Ausgestaltungen eines derartigen Rheometers finden sich in den entsprechenden Unteransprüchen.

Darüber hinaus wird die Aufgabe auch mit der Verwendung eines solchen Rheometers mit mindestens einem Schallgeber und Schallsensor zur Durchführung des vorstehenden Verfahrens gelöst.

Die Erfindung wird anhand der beigefügten Figuren beispielhaft näher erläutert. Es zeigen:
- Figur 1: - Rheometeranordnung in einer ersten Ausführungsform; und
- Figur 2: - Rheometeranordnung einer zweiten Ausführungsform.

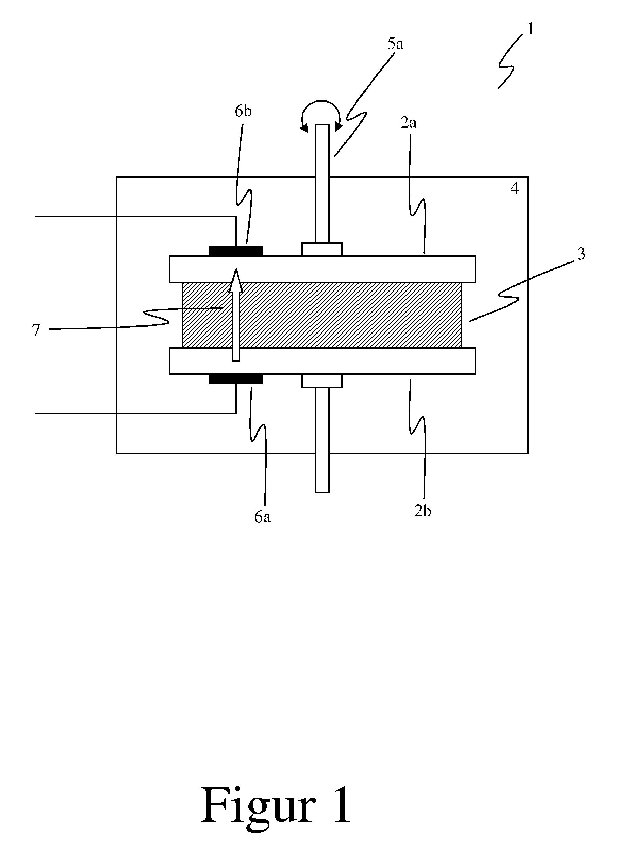

Figur 1 zeigt in einem Ausführungsbeispiel ein Rheometer 1, bei dem zwischen zwei Rheomterplatten 2a, 2b eine Harzprobe 3 eingebracht wurde. Die Harzprobe 3 zwischen den Rheometerplatten 2a, 2b liegt dabei innerhalb eines temperierten Bereiches 4, so dass die Harzprobe 3 zur Aushärtung mit einer Temperatur bzw. einem Temperaturverlauf beaufschlagt werden kann.

Die Rheometerplatten 2a, 2b liegen dabei diametral gegenüber, wobei zumindest eine Rheometerplatte 2a um ihre Drehachse 5a drehbar gelagert ist. Um diese Drehachse 5a lässt sich dann die bevorzugte Rheometerplatte 2a in die eine oder andere Richtung drehen, so dass entweder die Rheometerplatte 2a rotiert oder oszilliert.

Während des Aushärtvorgangs innerhalb des temperierten Bereiches 4 oszilliert oder rotiert nun die Rheometerplatte 2 um ihre Drehachse 5a, wodurch sich eine Materialbelastung an der Harzprobe 3 ergibt, deren Kräfte mit Hilfe einer nicht dargestellten Messsensorik gemessen werden können. Denn je nach Aushärtzustand der Harzprobe 3 ergeben sich unterschiedliche Kräfte, die benötigt werden, um die Rheometerplatte 2a zu oszillieren oder zu rotieren. Hieraus lassen sich dann entsprechende Rückschlüsse auf den Harzzustand bzw. die Fließeigenschaften (Viskosität, Gelpunkt, Verglasungspunkt, chemische Schwindung etc.) ableiten.

An den Rheometerplatten 2a, 2b sind des Weiteren ein Schallgeber 6a und Schallsensor 6b angeordnet, die während der rheologischen Messung durch das Rheometer 1 (Oszillieren oder Rotieren der Rheometerplatte 2a) einen Schallimpuls 7 aussenden und empfangen. Im Ausführungsbeispiel der Figur 1 ist der Schallgeber 6a an der Rheometerplatte 2b und der Schallsensor 6b an der Rheometerplatte 2a angeordnet, so dass die gesamte Harzprobe 3 einmal durchschallt wird. Eine derartige Anordnung des Schallgebers 6a und Schallsensors 6b eignet sich dabei besonders dann, wenn die rheologische Messung mit Hilfe einer Oszillation der Rheometerplatte 2a durchgeführt wird, so dass sichergestellt werden kann, dass der Schallimpuls 7 von dem Schallsensor 6b auch empfangen wird.

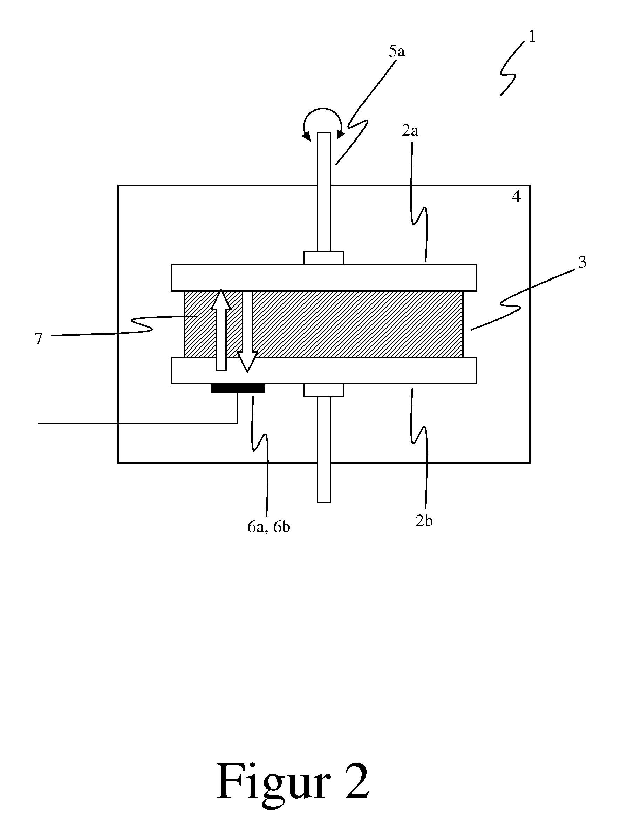

Erfolgt die rheologische Messung mit Hilfe einer Rotation der Rheometerplatte 2a, so ist anstelle des Durchschallungsbetriebes in Figur 1 das sogenannte Impulsechoverfahren, wie es in Figur 2 gezeigt ist, vorteilhaft. Hierbei ist der Schallgeber 6a auch gleichzeitig der Schallsensor 6b, wobei der Schallimpuls von dem Schallgeber 6a, angeordnet an der Rheometerplatte 2b, durch die Harzprobe läuft, an der gegenüberliegenden oberen Rheometerplatte 2a reflektiert und anschließend von dem an der Rheometerplatte 2b angeordneten Schallsensor 6b empfangen wird. Eventuell muss hier ein Vorlauf vorgesehen werden, um den Sendeimpuls und das Antwortsignal zeitlich zu trennen.

Sowohl in der Figur 1 als auch in der Figur 2 sind vorteilhafterweise Schallgeber und Schallsensor ein piezoelektrisches Element, welches besonders platzsparend an der Rheometerplatte 2a, 2b angeordnet werden kann. Das Anbringen des Schallgebers und Schallsensors kann beispielsweise durch Verkleben der flächig ausgebildeten piezoelektrischen Elementen an der Rheometerplatte durchgeführt werden.

Während der Aushärtung der Harzprobe 3 durchgeführte rheologische Messung und akustische Messung lässt sich dann anschließend durch eine entsprechende Korrelation dieser beiden Messergebnisse zusammenführen, so dass sich eine entsprechend hochgenaue Korrelationsmessung für die Überwachung bei der Herstellung von Faserverbundbauteilen ergibt.

## Patentansprüche

1. Verfahren zur Bestimmung einer Korrelation von durch ein Rheometer (1) ermittelbaren Fließeigenschaften mit durch einen Schallsensor (6b) ermittelbaren Schallübertragungseigenschaften eines Harzes für die Herstellung eines Faserverbundbauteils, mit den Schritten:
a) Bereitstellen eines Rheometers (1), an dem mindestens ein Schallgeber (6a) und Schallsensor (6b) zum Aussenden und Empfangen von Schallimpulsen (7) angeordnet sind,
b) Einbringen einer Harzprobe (3) in das Rheometer (1),
c) Beaufschlagen der in das Rheometer (1) eingebrachten Harzprobe (3) mit Temperatur, wobei während der Temperaturbeaufschlagung mindestens eine Fließeigenschaft der Harzprobe (3) mit Hilfe des Rheometers (1) und währenddessen an derselben Harzprobe (3) mit Hilfe des an dem Rheometer (1) angeordneten Schallgebers (6a) und Schallsensors (6b) mindestens eine Schallübertragungseigenschaft der Harzprobe (3) ermittelt wird, und
d) Korrelieren der durch das Rheometer (1) ermittelten mindestens einen Fließeigenschaft mit der durch den Schallgeber (6a) und Schallsensor (6b) ermittelten mindestens einen Schallübertragungseigenschaft.

2. Verfahren nach Anspruch 1, **dadurch gekennzeichnet, dass** ein Schallgeber und/oder Schallsensor bereitgestellt wird, der Schallimpulse (7) mittels eines piezoelektrischen Elementes aussendet und/oder empfängt.

3. Verfahren nach Anspruch 2, **dadurch gekennzeichnet, dass** das piezoelektrische Element ein piezoelektrisches Keramikmaterial aufweist und/oder dass das piezoelektrische Element flächig ausgebildet ist.

4. Verfahren nach einem der vorhergehenden Ansprüche, **dadurch gekennzeichnet, dass** die Viskosität, der Gelpunkt und/oder der Verglasungspunkt als Fließeigenschaft der Harzprobe mit Hilfe des Rheometers ermittelt wird und/oder dass die Schallgeschwindigkeit als Schallübertragungseigenschaft der Harzprobe mit Hilfe des an dem Rheometer angeordneten Schallgeber und Schallsensor ermittelt wird.

5. Verfahren nach einem der vorhergehenden Ansprüche, **gekennzeichnet durch** Korrelieren der Fließeigenschaft mit der Schallübertragungseigenschaft unter Berücksichtigung eines Temperaturverlaufes während der Temperaturbeaufschlagung der Harzprobe im Rheometer.

6. Rheometer (1) zur rheologischen Ermittlung mindestens einer Fließeigenschaft einer in das Rheometer eingebrachten Harzprobe, bei dem eine Materialbelastung während einer Beaufschlagung der Harzprobe mit Temperatur gemessen wird, **dadurch gekennzeichnet, dass** an dem Rheometer (1) zumindest ein Schallgeber (6a) und Schallsensor (6b) vorgesehen sind, die zum Aussenden und Empfangen eines Schallimpulses (7) zur Ermittlung einer Schallübertragungseigenschaft der Harzprobe (3) während der Temperaturbeaufschlagung und während der Ermittlung der mindestens einen Fließeigenschaft eingerichtet sind.

7. Rheometer (1) nach Anspruch 6, **dadurch gekennzeichnet, dass** der Schallgeber und/oder Schallsensor zum Aussenden und/oder Empfangen des Schallimpulses mittels eines piezoelektrischen Elementes ausgebildet ist.

8. Rheometer nach Anspruch 7, **dadurch gekennzeichnet, dass** das piezoelektrische Element ein piezoelektrisches Keramikmaterial aufweist und/oder dass das piezoelektrische Element flächig ausgebildet ist.

9. Rheometer nach einem der Ansprüche 6 bis 8, **dadurch gekennzeichnet, dass** das Rheometer zwei diametral gegenüber liegende Platten zum Messen der Materialbelastung der zwischen den Platten eingebrachten Materialprobe aufweist, wobei der Schallgeber und Schallsensor an dem Rheometer so angeordnet sind, dass der Schallimpuls zumindest einmal von der einen Platte zu der gegenüberliegenden Platte durch die Harzprobe übertragen wird.

10. Verwendung eines Rheometers mit mindestens einem Schallgeber und Schallsensor nach einem der Ansprüche 6 bis 9 zur Durchführung des Verfahrens nach einem der Ansprüche 1 bis 5.
